# EUROPEAN PATENT SPECIFICATION

(11) **EP 2 320 261 B1**
(45) Date of publication and mention of the grant of the patent: **16.01.2013**
(21) Application number: 10190528.9
(22) Date of filing: 09.11.2010
(51) Int. Cl.: G02B 7/10

(54) **Lens apparatus**
Linsenvorrichtung
Appareil de lentille

(30) Priority: 10.11.2009 JP 2009257292
(43) Date of publication of application: 11.05.2011
(73) Proprietor: Fujifilm Corporation, Minato-ku Tokyo 106-8620 (JP)
(72) Inventor: Mitarai, Tsuyoshi, Saitama 331-9624 (JP); Saito, Tatsuo, Saitama 331-9624 (JP)
(74) Representative: Klunker . Schmitt-Nilson . Hirsch

(56) References cited:
- EP-A1- 2 075 611
- EP-A2- 1 804 099
- JP-A- 2002 107 604

## Description

### BACKGROUND OF THE INVENTION

### Field of the Invention

The present invention relates to a lens apparatus, and more particularly, to a lens apparatus including a mechanism which drives a focus lens by a motor in accordance with a rotation position of a focus ring which is provided to a lens barrel and serves to perform a focus operation.

### Description of the Related Art

Up to now, for a video camera capable of carrying out relatively advanced operations, in order to enable an excellent operation both at automatic focusing and at manual focus adjustment, the following camera has been known. That is, the camera includes a first focus ring and a second focus ring in a lens barrel, and the first focus ring is movable between a first position and a second position on an optical axis. When the first focus ring is located at the first position, a rotation range thereof is not limited. On the other hand, when the first focus ring is located at the second position, the first focus ring is coupled to the second focus ring, and a rotation range of the second focus ring is set to a limited range corresponding to an adjustable range of a focus lens (see, for example, Japanese Patent Application Laid-Open No. 2008-102207 and the like).

In addition, for the lens barrel as described above including: the first focus ring which is movable with respect to the lens barrel between the first position and the second position on the optical axis; and the second focus ring whose position on the optical axis is fixed, the following lens barrel has been known. That is, the lens barrel includes a sensor which detects at which of the first position and the second position the first focus ring is located, a focus operation is controlled in accordance with a detection signal of the sensor, and a cover member which covers an outer peripheral part of the second focus ring is provided in order to prevent a user from unintentionally performing an erroneous operation on the second focus ring (see, for example, Japanese Patent Application Laid-Open No. 2007-178633 and the like).

EP 2 075 611 A1 discloses a lens apparatus having a lens barrel, a first and second focus ring both provided on the outer periphery of the lens barrel, wherein the first focus ring is rotatable without limitation on a rotation range and is moveable between a first and second position along the optical axis. The second focus ring is rotatable with a limitation on a rotation range.

### SUMMARY OF THE INVENTION

However, in the case as the above-mentioned conventional technology where the lens barrel includes the sensor which detects at which of the first position and the second position the first focus ring movable between the first position and the second position on the optical axis is located, there arises a problem that a diameter of the lens barrel becomes larger.

The present invention has been made in view of such circumstances, and therefore has an object to provide a lens apparatus in which, even when a sensor which detects a position of a first focus ring is provided, a diameter of a lens barrel does not become larger and the lens barrel can be downsized.

In order to achieve the above-mentioned object, a first aspect of the present invention provides a lens apparatus including a lens barrel which holds an optical system, and a lens drive unit which is attached to a lateral side of the lens barrel and rotates a rotatable operation ring to adjust the optical system and is housed in a case, the operation ring being provided on an outer periphery of the lens barrel, the lens apparatus characterized by comprising: a first focus ring which is provided on the outer periphery of the lens barrel so as to be rotatable without a limitation on a rotation range of the first focus ring and to be movable between a first position and a second position along an optical axis direction; and a second focus ring which is provided on the outer periphery of the lens barrel so as to be rotatable with a limitation on a rotation range of the second focus ring. The lens apparatus is further characterized in that: the first focus ring is not coupled to the second focus ring in a case where the first focus ring is located at any one of the first position and the second position, and the first focus ring is coupled to the second focus ring in a case where the first focus ring is located at another one of the first position and the second position; and a detection unit which detects at which of the first position and the second position the first focus ring is disposed in the case of the lens drive unit.

As described above, the detection unit which detects the position of the first focus ring is disposed in the case of the lens drive unit, which thus enables downsizing of the lens barrel.

In addition, according to a second aspect of the present invention, the detection unit includes: an interlock member which is disposed in the case of the lens drive unit and moves so as to interlock with a move of the first focus ring; and a detection sensor which detects a position of the interlock member.

In addition, according to a third aspect of the present invention, the interlock member has a part which extends out from an opening provided in the case of the lens drive unit on a side of the lens barrel and is fitted into a groove part provided on an outer periphery of the first focus ring, to thereby move so as to interlock with the move of the first focus ring in the optical axis direction.

As described above, the member which moves so as to interlock with the first focus ring is disposed in the case of the lens drive unit, which thus enables the downsizing of the lens barrel.

In addition, according to a fourth aspect of the present invention, the detection sensor is a reflection type sensor.

In addition, according to a fifth aspect of the present invention, the interlock member slides along a holding plate which is fixed to the lens drive unit, a light receiving part of the reflection type sensor receives light which is emitted from a light emitting part of the reflection type sensor and is reflected on the holding plate in the case where the first focus ring is located at the any one of the first position and the second position, and the interlock member blocks the light receiving part of the reflection type sensor from receiving the reflected light in the case where the first focus ring is located at the another one of the first position and the second position.

In addition, according to a sixth aspect of the present invention, the interlock member is made of a resin, and the holding plate is made of a metal.

With this configuration, it is possible to accurately detect a position by the reflection type sensor.

In addition, according to a seventh aspect of the present invention, the holding plate functions also as a member which prevents the interlock member from falling off an attachment position of the interlock member.

With this configuration, it is possible to accurately detect a position by the reflection type sensor.

As described hereinabove, according to the present invention, the detection unit which detects the position of the first focus ring is disposed in the case of the lens drive unit, which thus enables the downsizing of the lens barrel. Further, the interlock member is disposed in the case of the drive unit, and hence it is possible to accurately detect the position of the first focus ring without an influence of disturbance caused by a drop of water, dirt, and the like, and to perform accurate focus control.

### BRIEF DESCRIPTION OF THE DRAWINGS

Fig. 1 is a perspective view illustrating an entire configuration of a lens apparatus according to an embodiment of the present invention;
Fig. 2 is a cross sectional view illustrating a lens barrel of the lens apparatus which is observed from a lateral side thereof, in which only an upper half of the lens barrel with respect to an optical axis is illustrated;
Figs. 3A and 3B are side views each illustrating a schematic configuration of a detection unit which detects a position of a first focus ring in an optical axis direction, in which Fig. 3A illustrates a case where the first focus ring is located on a front side, and Fig. 3B illustrates a case where the first focus ring is located on a rear side;
Fig. 4 is a perspective view illustrating the detection unit; and
Figs. 5A to 5C are plan views each illustrating the detection unit.

### DETAILED DESCRIPTION OF THE PREFERRED EMBODIMENTS

Hereinafter, with reference to the attached drawings, a lens apparatus according to the present invention is described in detail.

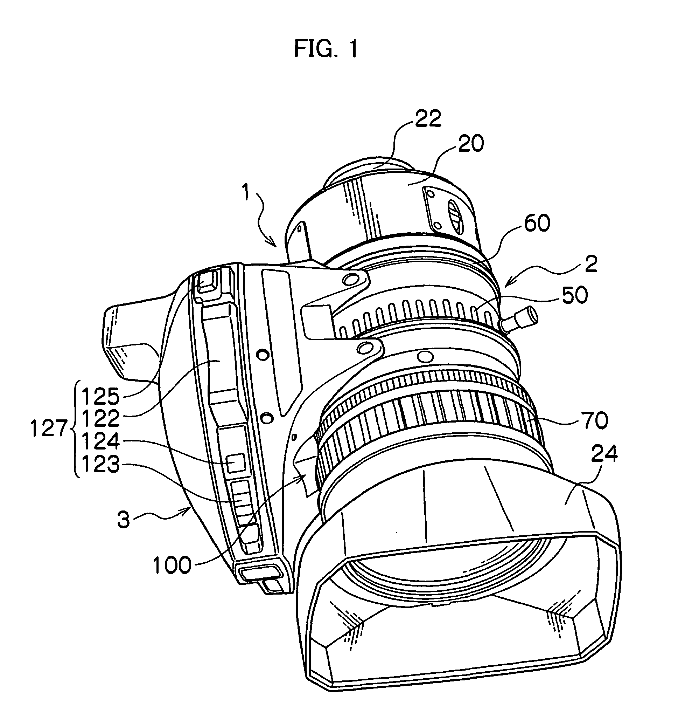

Fig. 1 is a perspective view illustrating an entire configuration of a lens apparatus according to an embodiment of the present invention.

As illustrated in Fig. 1, the lens apparatus 1 includes a lens barrel 2 and a lens drive unit (hereinafter, simply referred to as drive unit) 3 which is attached to an outer peripheral side surface of the lens barrel 2.

In Fig. 1, the lens barrel 2 of the lens apparatus 1 is formed into a substantially cylindrical shape, and a lens hood 24 is fitted to a front end part thereof. A first focus ring 70, a zoom ring 50, and an iris ring 60 are rotatably disposed on an outer peripheral part of the lens barrel 2 in the stated order from the front side. In addition, a mount attachment frame 20 and a mount ring 22 are attached to a rear end part of the lens barrel 2, and the lens apparatus 1 is fitted to an interchangeable-lens camera main body (not shown) via the mount ring 22.

It should be noted that a detailed configuration of the lens barrel 2 will be described later.

The drive unit 3 serves to rotate various operation rings which are rotatably provided on the outer periphery of the lens barrel 2, and when the drive unit 3 rotates the operation rings, adjustments of an optical system included in the lens barrel 2, such as zooming, focus adjustment, and iris adjustment, are performed. The drive unit 3 as described above includes: a motor which generates a driving force; a coupling gear which meshes with a tooth row formed on a peripheral surface of each operation ring; and a gear train which transmits the driving force of the motor to the coupling gear, and the coupling gear is provided so as to be exposed at an opening formed on a side surface of a case (casing) of the drive unit 3.

The drive unit 3 has a contour of an egg laid on its side in order to facilitate gripping an outer surface of the case thereof, and a side surface of the drive unit 3 which is opposed to the lens barrel 2 is formed into a concave shape so as to follow the peripheral surface of the lens barrel 2. In addition, the drive unit 3 and a television camera (not shown) attached to the rear end of the lens barrel 2 are connected to each other via a cable, and various signals are exchanged therebetween.

In addition, as illustrated in Fig. 1, the drive unit 3 includes an operation unit 127 formed of switches such as a zoom switch 122, a mode change switch 123, an automatic switch 124, and a return switch 125.

The zoom switch 122 serves to change (zoom) a focal length of the lens barrel 2, and is swingably provided with respect to an axis substantially orthogonal to an optical axis being centered. When a telephoto side convex part of the zoom switch 122 on the front side is pressed, the lens barrel 2 works to vary the magnification toward a telephoto side. Conversely, when a wide-angle side convex part thereof on the rear side is pressed, the lens barrel 2 works to vary the magnification toward a wide-angle side. In both of the pressing operations, a magnification-varying speed can be adjusted by a pressing amount (operation amount) of the zoom switch 122, and the larger the pressing amount is, the higher the magnification-varying speed becomes. It should be noted that the zoom switch 122 returns to its neutral position when the pressing is released.

The mode change switch 123 serves to switch between an automatic mode in which the iris adjustment is automatically performed and a manual mode in which the iris adjustment is manually performed. The mode change switch 123 is provided slidably along a direction substantially parallel to the optical axis, and when a slide operation is performed on the mode change switch 123, the mode change switch 123 is changed to any one of the automatic mode and the manual mode.

The automatic switch 124 is a switch for temporarily switching to the automatic mode when the iris adjustment is set to the manual mode. The automatic switch 124 is a button type switch, and in the state where the iris adjustment is set to the manual mode, the iris adjustment is switched to the automatic mode only when this button is being pressed.

The return switch 125 is a switch for switching whether or not another screen such as a screen on the air or a screen being photographed by another camera is displayed on a viewfinder provided in the television camera (not shown). The return switch 125 is a button type switch, and each time this button is pressed, whether or not another screen is displayed on the viewfinder is switched.

In addition, although not illustrated, the drive unit 3 includes a button type recording switch in addition to the above-mentioned switches, and each time a pressing operation is performed on the recording button, switching is made between recording start and recording stop. The recording button is located at a position at which, when a photographer grips the drive unit 3, a thumb of his/her gripping right hand is naturally placed. When recording is started, a video picture being photographed is recorded in a recording medium such as a videotape or a memory.

It should be noted that, for the drive unit 3, a detection unit 100 is further provided in the case of the drive unit 3 so as to be opposed to the first focus ring 70 which is provided on the outer periphery of the lens barrel 2 and moves in an optical axis direction. The detection unit 100 detects a position of the first focus ring 70 in the optical axis direction. This will be described in detail later.

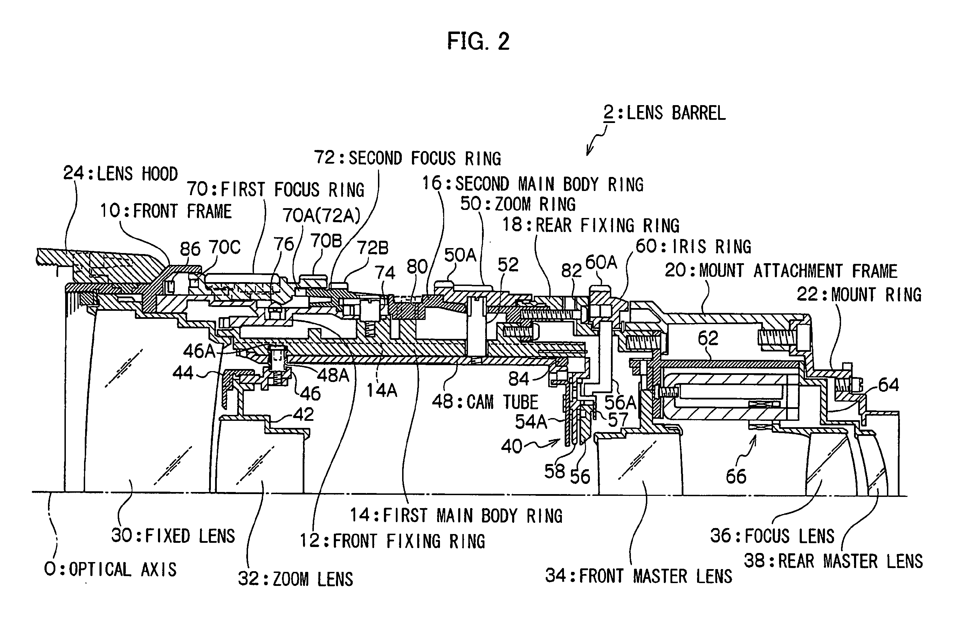

Fig. 2 is a cross sectional view illustrating the lens barrel 2 which is observed from a lateral side thereof, in which only an upper half of the lens barrel 2 with respect to an optical axis O is illustrated.

In Fig. 2, the lens barrel 2 is configured into a substantially cylindrical shape mainly by a front frame 10, a front fixing ring 12, a first main body ring 14, a second main body ring 16, a rear fixing ring 18, the mount attachment frame 20, and the mount ring 22.

The first main body ring 14 is an innermost peripheral component of the lens barrel 2, the front fixing ring 12 is fixed by a screw on an outer peripheral front side of the first main body ring 14, and the front frame 10 is fixed by a screw on a front side of the front fixing ring 12. In addition, the second main body ring 16 is fixed by a screw on an outer peripheral rear side of the first main body ring 14, and the rear fixing ring 18, the mount attachment frame 20, and the mount ring 22 are fixed by a screw on rear sides of the second main body ring 16, the rear fixing ring 18, and the mount attachment frame 20, respectively. It should be noted that the lens hood 24 is fitted to the front frame 10, and the lens barrel 2 is fitted to the interchangeable-lens camera main body (not shown) via the mount ring 22.

An optical system of the lens barrel 2 includes five groups of a fixed lens (first group lens) 30, a zoom (variable magnification) lens (second group lens) 32, a front master lens (third group lens) 34, a focus lens (fourth group lens) 36, and a rear master lens (fifth group lens) 38 in the stated order from an object side. In addition, an iris diaphragm 40 is provided immediately before the front master lens 34.

A lens frame 42 to which the zoom lens 32 is attached is fixed to a moving frame 46 by a holding ring 44. A cam tube 48 is rotatably held in an inner peripheral part of the first main body ring 14, and the moving frame 46 is held in an inner peripheral part of the cam tube 48 via a cam pin 46A.

That is, a straight groove 14A running in the optical axis O direction is formed on an inner peripheral surface of the first main body ring 14, a cam groove (a hole having a cam shape) 48A is formed in the cam tube 48, and the cam pin 46A fixed to the moving frame 46 is inserted into the cam groove 48A of the cam tube 48 to be engaged with the straight groove 14A of the first main body ring 14. With this configuration, the moving frame 46 is held so as to be able to move straight in the optical axis O direction with the rotation thereof being restricted, and is held at a position at which the cam pin 46A is engaged with the cam groove 48A.

Accordingly, when the cam tube 48 is rotated, a crossing position between the cam groove 48A of the cam tube 48 and the straight groove 14A of the first main body ring 14 changes to a position according to the cam shape, and the moving frame 46 moves back and forth in the optical axis O direction by the move of the cam pin 46A to this crossing position.

On the other hand, the zoom ring 50 is rotatably disposed on an outer peripheral part of the second main body ring 16, and a rod-like coupling shaft 52 is attached to an inner peripheral surface of the zoom ring 50 inward in a diametrical direction thereof. The coupling shaft 52 is inserted into a long hole (not shown) formed in the first main body ring 14 in a circumferential direction to be coupled to the cam tube 48. With this configuration, when a rotation operation is performed on the zoom ring 50, the cam tube 48 is rotated so as to interlock therewith. When the cam tube 48 is rotated, the moving frame 46 moves back and forth as described above, and the zoom lens 32 moves in the optical axis O direction so as to interlock with the moving frame 46. Accordingly, a zoom magnification can be changed by the rotation operation of the zoom ring 50.

The iris diaphragm 40 mainly includes a plastic base plate 54A, a tooth lock washer (cam plate) 56, and a plurality of diaphragm blades 58 which are disposed in rings of the base plate 54A and the cam plate 56. The iris ring 60 is rotatably disposed between the rear fixing ring 18 and the mount attachment frame 20, and a coupling shaft 56A which extends out from the cam plate 56 is coupled to the iris ring 60. With this configuration, the rotation of the iris ring 60 rotates the cam plate 56, which causes an opening/closing operation of the diaphragm blades 58.

The focus lens 36 serves to change a focal position of the optical system, and is supported movably in the optical axis O direction by a guide shaft and a rotation stopper (not shown) which are held between a holding frame 62 and a lens frame 64 of the rear master lens 38. The holding frame 62 holds the front master lens 34 and the like, and the lens frame 64 is disposed at a rear end of the holding frame 62. In addition, a pair of voice coil motors (VCM) 66 is provided to the holding frame 62 so as to sandwich the guide shaft, and the focus lens 36 is electrically driven by the power of the VCM 66.

The first focus ring 70 and the second focus ring 72 are rotatably disposed in an outer peripheral part of the front fixing ring 12. The first focus ring 70 has a rotation range which is not restricted, and thus can be rotated in an endless manner. Further, the first focus ring 70 is provided slidably in the optical axis direction. In addition, the rotation of the second focus ring 72 is restricted by a stopper shaft 74 so as to fall within a range of about 120 degrees.

Serrated clutch parts 70A and 72A are formed on opposed end surfaces of the first focus ring 70 and the second focus ring 72, respectively. In a state illustrated in Fig. 2 (a second position of the first focus ring), the clutch part 70A and the clutch part 72A are coupled to (mesh with) each other, so that the first focus ring 70 and the second focus ring 72 are integrally rotated. Accordingly, in this state, in the case where the first focus ring 70 is manually rotated, the first focus ring 70 can be rotated only within the limitation of a rotation range of about 120 degrees.

On the other hand, when the first focus ring 70 is slid toward the front side so as to go over an elastic member for clicking 76 (a first position of the first focus ring), the clutch parts 70A and 72A are uncoupled from each other. This enables the first focus ring 70 to be rotated in an endless manner without any limitation on the rotation range.

In addition, screw holes 80 and 82 for attaching the drive unit 3 which functions also as a grip part are formed on a side surface of the lens barrel 2.

A linear potentiometer substrate is provided on an outer peripheral surface of the first main body ring 14 along the optical axis direction, and when the zoom lens 32 moves in the optical axis direction by the rotation of the cam tube 48, the linear potentiometer substrate (linear POT substrate) outputs a position detection signal corresponding to the move position of the zoom lens 32 (a signal indicating an absolute position) to the drive unit 3 via a lead wire.

A magnetic ring 84 which is magnetized so as to have an N pole and an S pole is bonded to a rear end surface of the cam tube 48, and a magnetic sensor (MR sensor) is provided to the first main body ring 14 so as to be opposed to the magnetic ring 84. When the magnetic ring 84 is rotated together with the cam tube 48, the MR sensor outputs a pulse signal with the number of pulses corresponding to the rotation amount of the magnetic ring 84 (a signal indicating a relative position) to the drive unit 3 via the lead wire.

It should be noted that the output of the zoom linear POT is used when the power is turned on, and after that, the output of the MR sensor for zoom position detection is used.

An MR sensor for focus lens position detection is provided to the holding frame 62 which is opposed to the guide shaft of the focus lens 36, and the MR sensor outputs a pulse signal with the number of pulses corresponding to the move amount of the focus lens 36 (a signal indicating a relative position) to the drive unit 3 via the lead wire. In addition, a home position sensor (photo interrupter) for detecting a home position of the focus lens 36 is provided in the holding frame 62, and the drive unit 3 counts an output signal of the MR sensor with reference to the home position of the focus lens 36 which is detected by the home position sensor, to thereby detect an absolute position of the focus lens 36.

Gear wheels 70B and 72B are formed on peripheries of the first focus ring 70 and the second focus ring 72, respectively. The gear wheels 70B and 72B are coupled to gear wheels of detection shafts of a relative position detection sensor (incremental encoder) and an absolute position detection sensor (absolute encoder) which are provided to the drive unit 3, respectively.

With this configuration, the drive unit 3 can detect a relative rotation amount of the first focus ring 70, and can detect an absolute rotation position of the second focus ring 72. In addition, the detection unit 100 which detects the position in the optical axis direction, of the first focus ring 70 moving in the optical axis O direction is provided to the drive unit 3 so as to be opposed to the first focus ring 70 (gear wheel 70B) (see Fig. 1). This enables the drive unit 3 to detect on the basis of a detection signal from the detection unit 100 whether or not the first focus ring 70 is coupled to the second focus ring 72. It should be noted that the detection unit 100 will be described in detail later.

A slide macro ON/OFF switch, an AF/MF change switch, and a nonlock type AF push switch are provided on a side surface of the mount attachment frame 20, and output signals generated by an operation on these switches are supplied to the drive unit 3 via the lead wire.

Here, the macro ON/OFF switch is a switch for turning on/off a macro photography mode. The AF/MF change switch is a switch for switching between an automatic focus (AF) mode and a manual focus (MF) mode. In the AF mode, the focus lens 36 is automatically moved so that the contrast of a subject image becomes maximum, to thereby perform focal point adjustment. In the MF mode, a rotation operation is manually performed on the first focus ring 70 for moving the focus lens 36, to thereby perform focal point adjustment. The AF push switch is a switch for switching to the AF mode only during a period during which a key top thereof is pressed down (pushed), in the case where switching has been made to the MF mode by the AF/MF change switch.

In the case where switching has been made to the AF mode by the AF/MF change switch, irrespective of the operations on the first focus ring 70 and the second focus ring 72, the drive unit 3 performs AF control in which the focus lens 36 is automatically moved to an in-focus position.

On the other hand, in the case where switching has been made to the MF mode by the AF/MF change switch, a full MF mode (with an end) and an AF/MF mode (without an end) are switched therebetween in accordance with a slide position of the first focus ring 70.

That is, the drive unit 3 can detect the slide position of the first focus ring 70 in the optical axis direction (whether or not the first focus ring 70 is coupled to the second focus ring 72) on the basis of the detection signal from the detection unit 100. In the case where the first focus ring 70 is coupled to the second focus ring 72, switching is made to the full MF mode. In the case where the first focus ring 70 is not coupled to the second focus ring 72, switching is made to the AF/MF mode.

In the full MF mode in which the first focus ring 70 is coupled to the second focus ring 72, the drive unit 3 drives and controls the focus lens 36 on the basis of: an absolute position signal (a signal giving an order on a shooting distance within a range from a closest end to an infinite distance) from the absolute position detection sensor which detects an absolute rotation position of the second focus ring 72 and is coupled to the gear wheel 72B of the second focus ring 72; and a signal indicating an absolute position of a zoom position (a signal indicating zoom magnification) which is obtained from the output of the zoom linear POT when the power is turned on and the subsequent output of the MR sensor for zoom position detection. That is, a position corresponding to the shooting distance, to which the focus lens 36 should move, is set in advance in accordance with a current zoom position (zoom magnification) of the zoom lens 32, and when the second focus ring 72 is rotated so as to interlock with a manual operation on the first focus ring 70, the drive unit 3 moves the focus lens 36 to the corresponding position on the basis of a signal indicating the rotation position of the second focus ring 72 (the signal giving an order on the shooting distance) and the current zoom magnification.

In this way, when switching is made to the full MF mode, the focus lens 36 can be moved to a position corresponding to a desired shooting distance by manually operating the first focus ring 70. It should be noted that the first focus ring 70 is coupled to the second focus ring 72 with an end whose rotation range is restricted by the stopper shaft 74, and hence the rotation range thereof is restricted similarly to the second focus ring 72, so that the first focus ring 70 can be rotated within the rotation range from the closest end to the infinite distance.

In the full MF mode, the rotation range of the first focus ring 70 is restricted via the second focus ring 72, and on the basis of an operational feeling when the first focus ring 70 reaches an end, an operator can recognize that the focus lens 36 reaches the closest end or the infinite distance. Such a focus operation only by the first focus ring 70 is a method which a professional photographer and the like are used to adopting.

On the other hand, in the AF/MF mode in which the first focus ring 70 is not coupled to the second focus ring 72, focus control can be performed by selectively using as appropriate the MF mode in which the first focus ring 70 is moved to thereby move the focus lens 36 and the AF mode realized by pressing down the AF push switch as described above.

That is, when the first focus ring 70 is operated in the AF/MF mode and the drive unit 3 receives a relative position signal from the relative position detection sensor which is coupled to the gear wheel 70B of the first focus ring 70 and detects a relative rotation amount of the first focus ring 70, the drive unit 3 drives and controls the focus lens 36 on the basis of the relative position signal, and moves the focus lens 36 by a move amount corresponding to the rotation amount of the first focus ring 70.

It should be noted that the first focus ring 70 is not coupled to the second focus ring 72 in the AF/MF mode, and hence the rotation range thereof is not restricted, so that the first focus ring 70 can be rotated in an endless manner. However, when the focus lens 36 moves to a position of the infinite distance or the closest end, the drive unit 3 is adapted not to output an order to move beyond the end.

In addition, switching is temporarily made to the AF mode by pressing down the AF push switch in the AF/MF mode, and then switching is made back to the MF mode by releasing his/her finger from the AF push switch. At this time, with the position of the focus lens 36 which has automatically come into focus in the AF mode being continuously applied, the position of the focus lens 36 can be changed by an operation amount on the first focus ring 70, which enhances the usability.

When the seesaw zoom switch 122 provided in the drive unit 3 is operated, a rotation driving force is transmitted from the electric motor included in the drive unit to a gear wheel 50A formed on a periphery of the zoom ring 50, whereby the zoom ring 50 can be rotated. In addition, when the zoom ring 50 (a zoom lever (not shown) which is implanted in the zoom ring 50) is manually operated, the zoom ring 50 can be rotated.

When the zoom ring 50 is rotated, the cam tube 48 coupled thereto via the coupling shaft 52 is rotated. When the cam tube 48 is rotated, the moving frame 46 moves back and forth in the optical axis O direction via the cam pin 46A which is engaged with the straight groove 14A formed in the first main body ring 14 and with the cam groove 48A of the cam tube 48. When the zoom ring 50 is rotated as described above, the zoom lens 32 can be moved in the optical axis O direction, and zoom magnification can be changed.

When the zoom magnification is changed by the move of the zoom lens 32 in the above-mentioned manner, a focal point plane moves. The drive unit 3 uses the focus lens 36 also as a correction optical system which corrects the move of the focal point plane caused by the change in zoom magnification, and controls a position of the focus lens 36 so that the focal point plane does not move irrespective of the zoom magnification.

That is, the drive unit 3 acquires a current zoom position of the zoom lens 32 before a zoom operation on the basis of the output of the zoom linear POT when the power is turned on and the subsequent output of the MR sensor for zoom position detection, and acquires a current position of the focus lens 36 from the MR sensor for focus lens position detection. From a correction curve indicating a relation between the zoom position and the focus lens position, which is prepared in advance for each shooting distance for not moving the focal point plane, the drive unit 3 selects a corresponding correction curve on the basis of the acquired zoom position and the acquired focus lens position. After that, when the move amount of the zoom lens 32 is detected on the basis of the output signal of the MR sensor for zoom lens position detection, the drive unit 3 reads out a focus lens position (the focus lens position at which the focal point plane does not move) corresponding to the detected zoom position from the selected correction curve, and moves the focus lens 36 to the read-out focus lens position.

With this configuration, even when the zoom magnification is changed after the focus is adjusted by such focus control that the focal point plane is positioned on an image pickup element of the camera main body to which the lens barrel 2 is fitted, it is possible to prevent the focal point plane from moving (to prevent the lenses from being brought out of focus).

Accordingly, even when the zoom magnification is changed, it is possible to prevent the focal point plane from moving, and hence once the focus is adjusted by such focus control that the focal point plane is positioned on the image pickup element of the camera main body to which the lens barrel 2 is fitted, it is possible to keep the lenses in focus even when the zoom operation is performed thereafter.

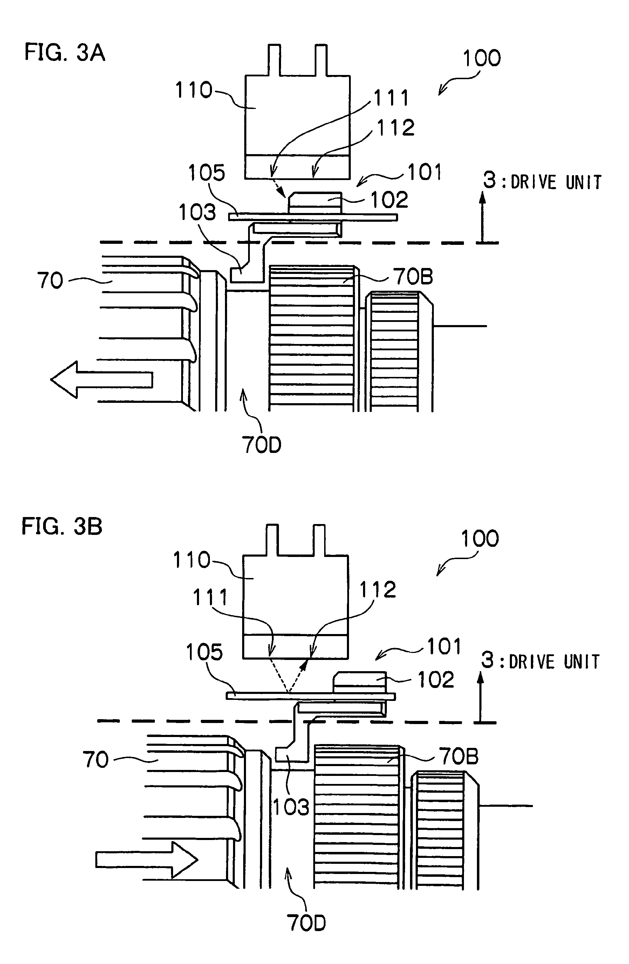

Figs. 3A and 3B are side views each illustrating a schematic configuration of the detection unit 100 which detects the position of the first focus ring 70 in the optical axis direction.

As illustrated in Fig. 3A, the detection unit 100 includes: a switching interlock member 101 which interlocks with the move of the first focus ring 70 in the optical axis direction for switching the mode of the focus control and similarly moves in the optical axis direction; and a reflection type sensor 110 which detects a position of the switching interlock member 101.

The switching interlock member 101 is formed of an interlock member main body 102 and a leg part 103. Then, the interlock member main body 102 is configured to be slidable along a holding plate 105 which is disposed substantially parallel to the optical axis while sandwiching the holding plate 105. The interlock member main body 102, the holding plate 105, and the reflection type sensor 110 are opposed to the lens barrel 2, and are each disposed at a position inside of the drive unit 3 corresponding to the position of the first focus ring 70.

In addition, the leg part 103 of the switching interlock member 101 extends from an opening (not shown) provided in the case of the drive unit 3 to the outside toward the lens barrel 2, and is fitted into a groove part 70D which is provided adjacently to the gear wheel 70B along the outer periphery of the first focus ring 70. With this configuration, when the first focus ring 70 is moved in the optical axis direction, the switching interlock member 101 is also moved in the optical axis direction so as to interlock with the move of the first focus ring 70.

It should be noted that an appropriate clearance is provided in both of the fitting of the leg part 103 of the switching interlock member 101 into the groove part 70D of the first focus ring 70 and the sliding of the interlock member main body 102 along the holding plate 105. It is configured so that a smooth operation is realized in both of the move of the switching interlock member 101 when the first focus ring 70 is moved in the optical axis direction and the motion when the first focus ring 70 is rotated with the position thereof in the optical axis direction being fixed.

That is, no biasing force acts on the switching interlock member 101 normally, and hence the switching interlock member 101 is in a free state. At the time of actual photography, the switching interlock member 101 simply touches another member by its own weight depending on states (positions) of the lens barrel 2 and the drive unit 3 (lens apparatus 1).

The reflection type sensor 110 includes a light emitting part 111 which emits light and a light receiving part 112 which receives reflected light. The reflection type sensor 110 detects a position of the switching interlock member 101 on the basis of the presence or absence (intensity) of the reflected light, to thereby detect a position of the first focus ring 70.

In addition, the switching interlock member 101 is formed of a resin, and the holding plate 105 is formed of a metal.

Fig. 3A illustrates a state where the first focus ring 70 is located at a front-side position (first position), that is, the first focus ring 70 is not coupled to the second focus ring 72. Fig. 3B illustrates a state where the first focus ring 70 is located at a rear-side position, that is, the first focus ring 70 is coupled to the second focus ring 72.

In the case as illustrated in Fig. 3B where the first focus ring 70 is located at the rear-side position (second position), the switching interlock member 101 is also located on the rear side of the reflection type sensor 110. In this case, as indicated by a broken-line arrow in Fig. 3B, light emitted from the light emitting part 111 of the reflection type sensor 110 is reflected on a surface of the holding plate 105 made of a metal to be received by the light receiving part 112. As a result, the reflection type sensor 110 detects that the first focus ring 70 is located at the rear-side position.

On the other hand, in the case as illustrated in Fig. 3A where the first focus ring 70 is located at the front-side position, the switching interlock member 101 is also located on the front side of the reflection type sensor 110. In this case, a reflection surface of the light emitted from the light emitting part 111 switches from the metal surface of the holding plate 105 to a resin surface of the interlock member main body 102, and the amount of reflected light extremely decreases, so that the reflected light is not received by the light receiving part 112. As a result, the reflection type sensor 110 detects that the first focus ring 70 is located at the front-side position.

As described above, the switching interlock member 101 is formed of a resin, to thereby differentiate a light reflection state thereof from that of the holding plate 105 made of a metal, which makes it possible to accurately detect focus switching. In addition, the switching interlock member 101 is formed of a resin, which facilitates the manufacture thereof.

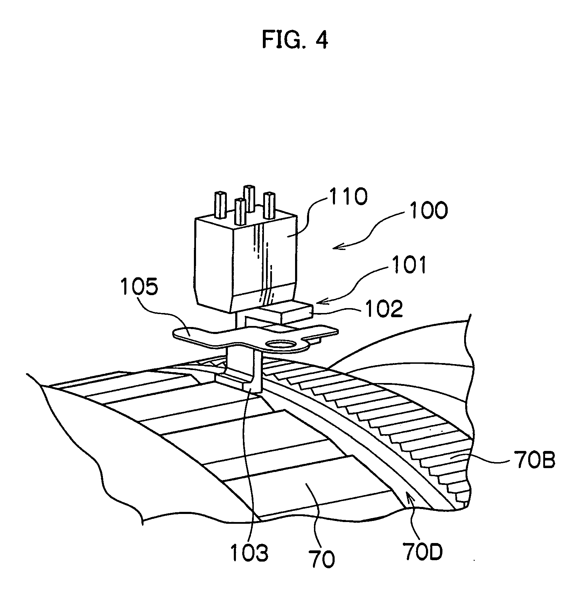

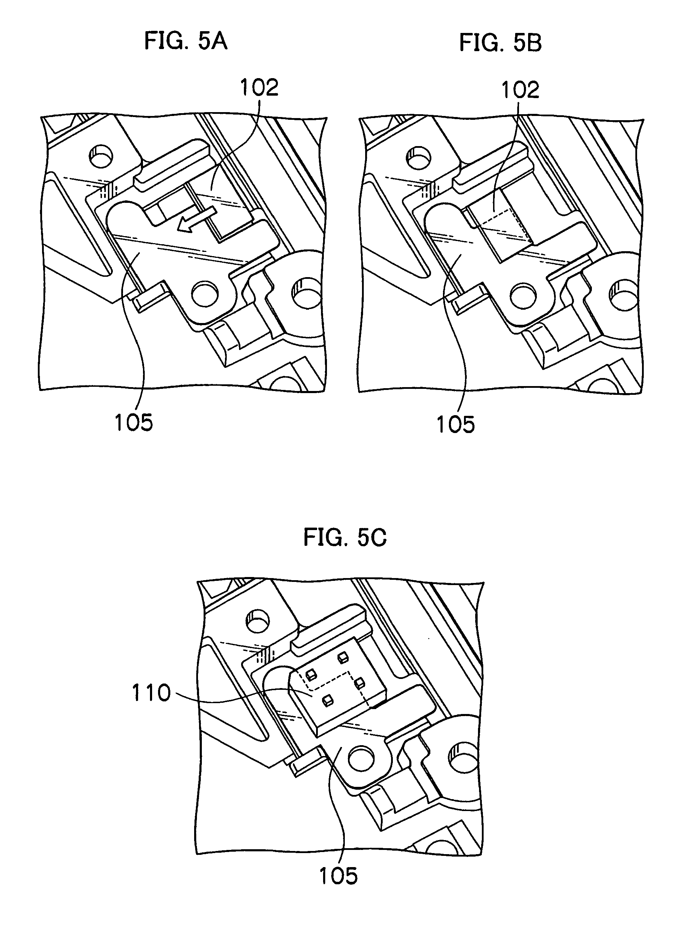

Fig. 4 is a perspective view illustrating the detection unit 100. Figs. 5A to 5C are plan views (perspective views observed from substantially directly above) each illustrating the detection unit 100.

It should be noted that, in Figs. 5A and 5B, the reflection type sensor 110 is omitted in order to illustrate the move of the switching interlock member 101, and Fig. 5C illustrates a state observed from above the reflection type sensor 110 in the case where the switching interlock member 101 is located at the front-side position. In addition, the switching interlock member 101, the holding plate 105, and the reflection type sensor 110 are disposed in the drive unit 3, and in Figs. 5A to 5C, it is assumed that members such as the first focus ring 70 on the lens barrel 2 side are hidden by the case (casing) of the drive unit 3.

Fig. 5A illustrates a case where the switching interlock member 101 (that is, the first focus ring 70) is located at the rear-side position, and as indicated by an arrow in Fig. 5A, the switching interlock member 101 can be moved to the front side. On the other hand, Fig. 5B illustrates a case where the switching interlock member 101 is located at the front-side position.

As illustrated in Figs. 4, 5A, 5B, and 5C, the interlock member main body 102 is configured to move while sandwiching the holding plate 105. With this configuration, in the case were the switching interlock member 101 is located at the rear-side position, the holding plate 105 made of a metal has a function of reflecting the light emitted from the reflection type sensor 110 as well as a function of preventing the switching interlock member 101 from falling off.

As described above, in the present embodiment, the detection unit 100 which detects the position of the first focus ring 70 in the optical axis direction is disposed in the drive unit 3, and only the leg part 103 of the switching interlock member 101 extends to the outside of the drive unit 3 to be fitted into the groove part 70D of the first focus ring 70. With this configuration, the lens barrel can be downsized, and because only the opening for extending out the leg part 103 is formed in the drive unit 3, even if a drop of water or dirt is attached to the first focus ring 70, the drop of water or dirt can be prevented from entering the inside of the drive unit 3. As a result, it is possible to accurately detect the position of the first focus ring 70 in the optical axis direction without an influence of disturbance caused by dirt, a drop of water, and the like, and to perform accurate focus control.

It should be noted that, in the above-mentioned example, the first focus ring is not coupled to the second focus ring in the case where the first focus ring is located at the first position (in the above-mentioned example, the front-side position), and the first focus ring is coupled to the second focus ring in the case where the first focus ring is located at the second position (in the above-mentioned example, the rear-side position), but the coupling relation between the first focus ring and the second focus ring depending on the position of the first focus ring may be inverted.

Hereinabove, the lens apparatus of the present invention has been described in detail. The present invention is not limited to the above-mentioned example, and as a matter of course, can be variously improved or modified within a range that does not depart from the gist of the present invention as defined in the claims.

## Claims

1. A lens apparatus (1) including a lens barrel (2) which holds an optical system, and a lens drive unit (3) which is housed in a case, is attached to a lateral side of the lens barrel and rotates a rotatable operation ring to adjust the optical system, the operation ring being provided on an outer periphery of the lens barrel, the lens apparatus, comprising:
a first focus ring (70) which is provided on the outer periphery of the lens barrel (1) so as to be rotatable without a limitation on a rotation range of the first focus ring and to be movable between a first position and a second position along an optical axis (O) direction; and
a second focus ring (72) which is provided on the outer periphery of the lens barrel so as to be rotatable with a limitation on a rotation range of the second focus ring, and
the first focus ring (70) is not coupled to the second focus ring (72) in a case where the first focus ring is located at any one of the first position and the second position, and the first focus ring is coupled to the second focus ring in a case where the first focus ring is located at another one of the first position and the second position;
**characterized in that**:
a detection unit (100) which detects at which of the first position and the second position the first focus ring (70) is disposed in the case of the lens drive unit (3).

2. The lens apparatus (1) according to claim 1, wherein the detection unit (100) includes:
an interlock member (101) which is disposed in the case of the lens drive unit (3) and moves so as to interlock with a move of the first focus ring (70); and
a detection sensor (110) which detects a position of the interlock member.

3. The lens apparatus (1) according to claim 2, wherein the interlock member (101) has a part (103) which extends out from an opening provided in the case of the lens drive unit (3) on a side of the iens barrel (2) and is fitted into a groove part (70D) provided on an outer periphery of the first focus ring (70), to thereby move so as to interlock with the move of the first focus ring in the optical axis (O) direction.

4. The lens apparatus (1) according to claim 2 or 3, wherein the detection sensor (110) is a reflection type sensor (110).

5. The lens apparatus (1) according to claim 4, wherein:
the interlock member (101) slides along a holding plate (105) which is fixed to the lens drive unit;
a light receiving part (112) of the reflection type sensor (110) receives light which is emitted from a light emitting part (111) of the reflection type sensor and is reflected on the holding plate (105) in the case where the first focus ring (70) is located at the any one of the first position and the second position; and
the interlock member (101) blocks the light receiving part (112) of the reflection type sensor (110) from receiving the reflected light in the case where the first focus ring (70) is located at the another one of the first position and the second position.

6. The lens apparatus (1) according to claim 5, wherein the interlock member (101) is made of a resin, and the holding plate (105) is made of a metal.

7. The lens apparatus (1) according to claim 5 or 6, wherein the holding plate (105) functions also as a member which prevents the interlock member (101) from falling off an attachment position of the interlock member.

## Patentansprüche

1. Objektiv (1), enthaltend einen Objektivtubus (2), der ein optisches System hält, und eine Objektivantriebseinheit (2), die in einem Gehäuse untergebracht ist, die auf einer Seite des Objektivtubus befestigt ist, und die einen drehbaren Betätigungsring zum Einstellen des optischen Systems dreht, wobei der Betätigungsring am Außenumfang des Objektivtubus vorgesehen ist, umfassend:
einen ersten Fokussierring (70), der an dem Außenumfang des Objektivtubus (1) drehbar ohne Begrenzung in einem Drehbereich des ersten Fokussierrings drehbar ist, und der zwischen einer ersten Stellung und einer zweiten Stellung entlang der optischen Achse (O) bewegbar ist; und
einen zweiten Fokussierring (72), der an dem Außenumfang des Objektivtubus angeordnet und mit einer Begrenzung im Drehbereich des zweiten Fokussierrings drehbar ist, und
wobei der erste Fokussierring (70) dann nicht mit dem zweiten Fokussierring (72) gekoppelt ist, wenn der erste Fokussierring sich in der ersten Stellung oder der zweiten Stellung befindet, und der erste Fokussierring mit dem zweiten Fokussierring dann gekoppelt ist, wenn der erste Fokussierring sich an einer anderen Stelle als in der ersten Stellung oder der zweiten Stellung befindet;
**dadurch gekennzeichnet, dass**
eine Nachweiseinheit (100) vorgesehen ist, welche nachweist, an welcher von der ersten Stellung und der zweiten Stellung der erste Fokussierring (70) sich in dem Gehäuse der Objektivantriebseinheit befindet.

2. Objektiv (1) nach Anspruch 1, bei dem die Nachweiseinheit (100) enthält:
ein Verriegelungselement (101), welches sich in dem Gehäuse der Objektivantriebseinheit (3) befindet und sich so bewegt, dass es sich mit einer Bewegung des ersten Fokussierrings (70) verriegelt; und
einen Nachweissensor (110), der eine Stellung des Verriegelungselements nachweist.

3. Objektiv (1) nach Anspruch 2, bei dem das Verriegelungselement (101) einen Teil (103) enthält, der sich von einer in dem Gehäuse der Objektivantriebseinheit (3) auf der Seite des Objektivtubus (2) befindlichen Öffnung aus erstreckt und in einen Nutabschnitt (70D) passt, der am Außenumfang des ersten Fokussierrings (70) vorgesehen ist, um sich zu bewegen und sich mit der Bewegung des ersten Fokussierrings in der Richtung der optischen Achse (O) zu bewegen.

4. Objektiv (1) nach Anspruch 2 oder 3, bei dem der Nachweissensor (110) ein Reflexionssensor (110) ist.

5. Objektiv (1) nach Anspruch 4, bei dem
das Verriegelungselement (101) entlang einer an der Objektivantriebseinheit fixierten Halteplatte (105) gleitet;
ein Lichtempfangsteil (12) des Reflexionssensors Licht empfängt, das von einem Lichtemissionsteil (111) des Reflexionssensors emittiert und an der Halteplatte (105) reflektiert wird, wenn sich der erste Fokussierring (70) in der ersten Stellung oder der zweiten Stellung befindet; und
das Verriegelungselement (101) den Lichtempfangsteil (112) des Reflexionssensors (110) an einem Empfang reflektierten Lichts dann hindert, wenn der erste Fokussierring (70) sich in einer anderen Stellung als der ersten oder der zweiten Stellung befindet.

6. Objektiv (1) nach Anspruch 5, bei dem das Verriegelungselement (101) aus Harzmaterial und die Halteplatte (105) aus Metall besteht.

7. Objektiv (1) nach Anspruch 5 oder 6, bei dem die Halteplatte (105) auch als Element fungiert, welches das Verriegelungselement (101) vor einem Herausfallen aus einer Befestigungsposition des Verriegelungsglieds bewahrt.

## Revendications

1. Appareil d'objectif (1) comprenant une monture d'objectif (2) qui maintient un système optique, et une unité d'entraînement d'objectif (3) qui est logée dans un boîtier, est attachée à un côté latéral de la monture d'objectif et fait tourner une bague d'actionnement qui peut être tournée pour ajuster le système optique, la bague d'actionnement étant prévue sur une périphérie extérieure de la monture d'objectif, l'appareil d'objectif comprenant :
une première bague de mise au point (70) qui est prévue sur la périphérie extérieure de la monture d'objectif (1) de manière à pouvoir être tournée sans limitation dans une plage de rotation de la première bague de mise au point et de manière à pouvoir être déplacée entre une première position et une deuxième position le long d'une direction d'axe optique (O) ; et
une deuxième bague de mise au point (72) qui est prévue sur la périphérie extérieure de la monture d'objectif de manière à pouvoir être tournée avec limitation dans une plage de rotation de la deuxième bague de mise au point, et
la première bague de mise au point (70) n'est pas accouplée à la deuxième bague de mise au point (72) dans un cas dans lequel la première bague de mise au point est située à l'une quelconque de la première position et de la deuxième position, et la première bague de mise au point est accouplée à la deuxième bague de mise au point dans un cas dans lequel la première bague de mise au point est située à une autre de la première position et de la deuxième position ;
**caractérisé par**
une unité de détection (100) qui détecte à laquelle de la première position et de la deuxième position la première bague de mise au point (70) est disposée dans le boîtier de l'unité d'entraînement d'objectif (3).

2. Appareil d'objectif (1) selon la revendication 1, dans lequel l'unité de détection (100) comprend :
un élément de verrouillage (101) qui est disposé dans le boîtier de l'unité d'entraînement d'objectif (3) et qui se déplace de manière à se verrouiller avec un déplacement de la première bague de mise au point (70) ; et
un capteur de détection (110) qui détecte une position de l'élément de verrouillage.

3. Appareil d'objectif (1) selon la revendication 2, dans lequel l'élément de verrouillage (101) comporte une partie (103) qui s'étend hors d'une ouverture prévue dans le boîtier de l'unité d'entraînement d'objectif (3) d'un côté de la monture d'objectif (2) et qui est assemblée dans une partie de rainure (70D) prévue sur une périphérie extérieure de la première bague de mise au point (70), pour se déplacer de ce fait de manière à se verrouiller avec le déplacement de la première bague de mise au point dans la direction de l'axe optique (O).

4. Appareil d'objectif (1) selon la revendication 2 ou 3, dans lequel le capteur de détection (110) est un capteur de type à réflexion (110).

5. Appareil d'objectif (1) selon la revendication 4, dans lequel :
l'élément de verrouillage (101) coulisse le long d'une plaque de maintien (105) qui est fixée à l'unité d'entraînement d'objectif ;
une partie de réception de lumière (112) du capteur de type à réflexion (110) reçoit la lumière qui est émise par une partie d'émission de lumière (111) du capteur de type à réflexion et qui est réfléchie sur la plaque de maintien (105) dans le cas où la première bague de mise au point (70) est située à l'une quelconque de la première position et de la deuxième position ; et
l'élément de verrouillage (101) empêche la partie de réception de lumière (112) du capteur de type à réflexion (110) de recevoir la lumière réfléchie dans le cas où la première bague de mise au point (70) est située à ladite autre de la première position et de la deuxième position.

6. Appareil d'objectif (1) selon la revendication 5, dans lequel l'élément de verrouillage (101) est réalisé en une résine, et la plaque de maintien (105) est réalisée en un métal.

7. Appareil d'objectif (1) selon la revendication 5 ou 6, dans lequel la plaque de maintien (105) agit également en tant qu'élément qui empêche l'élément de verrouillage (101) de sortir d'une position de fixation de l'élément de verrouillage.
